Europäisches Patentamt

European Patent Office

Office européen des brevets

(11) Numéro de publication: **0 052 687**
**B1**

(12) **FASCICULÉ DE BREVET EUROPEEN**

(45) Date de publication du fascicule du brevet: **12.09.84**

(51) Int. Cl.³: **B 23 P 19/06**

(21) Numéro de dépôt: **80401683.0**

(22) Date de dépôt: **25.11.80**

(54) **Cinématique de déblocage de goujon pour automate de goujonnage.**

(43) Date de publication de la demande:
**02.06.82 Bulletin 82/22**

(45) Mention de la délivrance du brevet:
**12.09.84 Bulletin 84/37**

(84) Etats contractants désignés:
**BE DE GB IT NL**

(56) Documents cités:
**FR-A-2 054 265**
**US-A-3 298 089**
**US-A-3 319 494**
**US-A-3 791 242**

(73) Titulaire: **ETAT-FRANCAIS représenté par le**
**DELEGUE GENERAL POUR L'ARMEMENT**
**Bureau des Brevets et Inventions de la**
**Délégation Générale pour l'Armement 14, rue**
**Saint-Dominique**
**F-75997 Paris Armées (FR)**

(72) Inventeur: **Gibert, Pierre**
**46, Boulevard de la Gespe**
**F-65000 Tarbes (FR)**

Courier Press, Leamington Spa, England.

# Description

La présente invention concerne plus particulièrement des perfectionnements aux moyens de vissage ou de dévissage de goujons de fortes dimensions.

En effet, les moyens de vissage et/ou de dévissage du goujon constitués par vérin et une ou deux roues libres sont entraînés à une vitesse constante du début à la fin de chaque opération de vissage ou de dévissage dudit goujon. Par ailleurs lorsqu'on rencontre un point lors de l'une ou l'autre de ces opérations, il faut parfois recourir à d'autres moyens pour vaincre cette résistance. C'est le cas lorsque le dévissage nécessite de développer un couple proche ou supérieur du maximum du couple que peut développer le système vérin-roue libre.

Un dispositif de ce genre est décrit dans le brevet US 3.319.494. Dans ce dispositif, les faibles couples sont transmis par un limiteur de couple constitué par un crabot à griffes et les couples importants sont transmis au moyen d'engrenages par une couronne externe dont le diamètre n'est pas sensiblement plus important que celui de l'arbre de sortie. De ce fait le couple maximal à transmettre ne peut guère dépasser le triple du couple transmis par le limiteur de couple.

La présente invention a pour but de résoudre ce problème et d'apporter une solution à la fois simple dans sa conception et efficace en fonctionnement, qui permette de transmettre un couple maximal largement plus important que le couple normal de dévissage.

L'invention a pour objet un dispositif rotatif de serrage-désserrage, notamment de goujonnage selon les termes du préambule de la revendication 1. Il se caractérise en ce que le multiplicateur d'effort est constitué par une cinématique comprenant un excentrique situé en aval de l'embrayage et ca sur l'arbre moteur, une bielle de liaison reliant l'excentrique à une couronne extérieure soumise ainsi à une rotation oscillatoire, cette couronne étant susceptible de transmettre au moyen d'une roue libre à galets l'effort à fournir à l'arbre de dégoujonnage, lorsque le moyen de détection de la friction de l'embrayage constate le dépassement de la valeur prédéterminée, le moyen de détection commandant alors le fonctionnement de la roue libre, la liaison entre l'armature et l'arbre de goujonnage étant obtenue par une poulie motrice qui est elle-même reliée mécaniquement par une chaîne à une poulie réceptrice clavetée sur l'arbre de goujonnage.

Selon une caractéristique de l'invention le moyen de détection de la valeur prédéterminée de l'effort de dévissage est constitué par un compteur de maillons de la chaîne reliant les poulies.

Ainsi, le système constitué par un excentrique, une bielle et la roue libre permet d'opérer à vitesse réduite, par exemple au début de l'une des opérations de vissage ou de dévissage, ou chaque fois que l'on rencontre un point dur nécessitant de développer un effort important. Par un choix judicieux du rapport des rayons de la roue libre à celui de l'excentrique, on peut développer, si besoin est, un couple pouvant dépasser 3.000 mN.

Dès lors, la transmission directe peut être utilisée lorsque l'opération de vissage ou de dévissage a été amorçée de manière à augmenter la vitesse de rotation du goujon et donc de permettre un gain de temps très appréciable.

D'autres avantages et particularités ressortiront à la lecture de la description donnée ci-dessous à titre indicatif mais non limitatif d'un mode de réalisation préféré de l'invention, ainsi que du dessin annexé sur lequel:

La fig. 1 est une vue en coupe du dispositif selon l'invention.

La fig. 2 est une vue schématique partielle du dispositif selon l'invention.

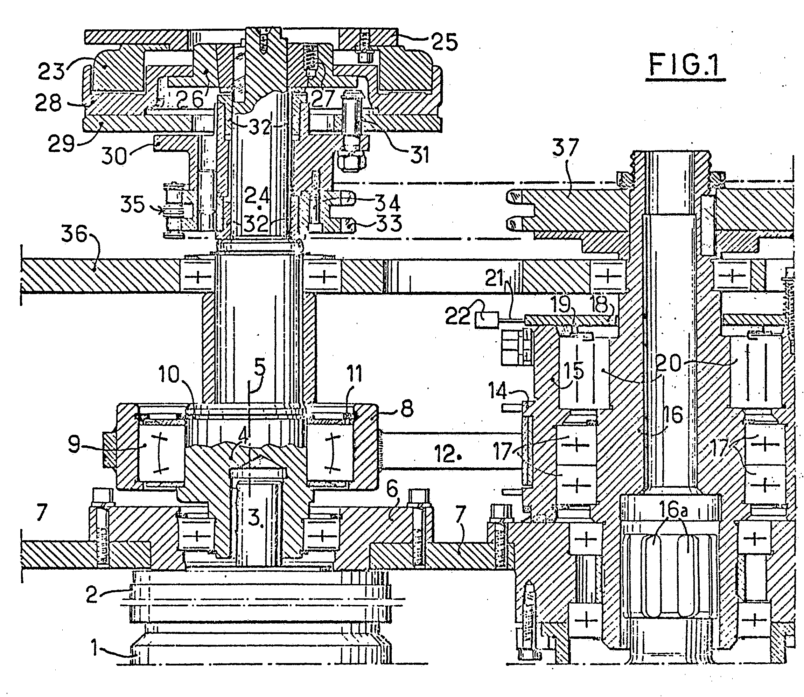

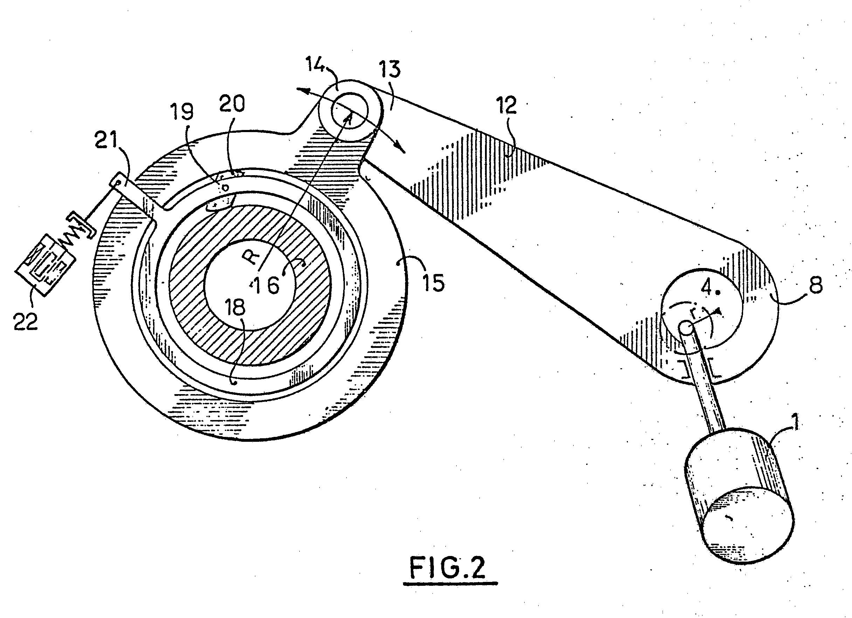

Le dispositif représenté sur les figs. 1 et 2 comprend un moteur d'entraînement 1 associé à un réducteur 2 dont l'arbre de sortie 3 est coaxial à l'axe de rotation du moteur 1. Un excentrique 4 est monté sur l'arbre de sortie 3 du réducteur 2 de façon que son axe 5 soit décalé de l'axe de rotation. L'excentrique 4 est monté par l'intermédiaire de paliers 6 du moto-réducteur 1-2 sur un plateau de support 7. L'excentrique 4 est également monté à l'extrémité 8 d'une bielle-manivelle 12, par l'intermédiaire de roulements à rotule 9, d'une plaque 10 et de circlips 11. Par son extrémité 13, la bielle manivelle 12 est reliée à une chape 14 d'une couronne extérieure 15 montée concentriquement sur l'arbre intérieur de dévissage 16, au moyen de roulements à billes 17. L'arbre de dévissage 16 est solidaire de l'extracteur de goujon, non représenté, au moyen de cannelures 16a.

Un disque de commande 18 portant des ergots 19 de support de galets de transmission 20 est solidaire d'un bras 21 dont le déplacement angulaire est effectué au moyen d'un électroaimant 22 (fig. 20). Les rayons de courbure des faces d'appui des galets 20 sont déterminés de façon que lesdites faces soient en contact avec la couronne extérieure 15 et l'arbre de commande 16 pour un sens de déplacement de ladite couronne extérieure 15. Dans l'autre sens de déplacement et pour la position neutre du bras 21 et donc du disque de commande 18, les galets 20 ne sont en appui ni sur la couronne extérieure, ni sur l'arbre de commande 16. De ce fait, le mouvement alternatif de la bielle 12 et par suite de la couronne extérieure 15, n'est pas transmis à l'arbre de commande 16.

Si $r$ et R sont respectivement les rayons des mouvements de l'excentrique 4 et de la couronne extérieure 15, le rapport de multiplication du couple est alors égal à R/r, ledit rapport pouvant être modifié par modification des dimensions de la chappe 14 ou de l'excentrique 4.

Des moyens de transmission directe sont également prévus et comprennent un embrayage dont l'armature supérieure 23 est calée sur un arbre 24 entraîné en rotation à partir du moto-réducteur ou par tout autre moyen approprié, ledit calage étant obtenu, par exemple, par une pièce intermédiaire 25 tandis que le centrage de ladite armature supérieure 23 est obtenu par une pièce de centrage 26, lesdites pièces 25 et 26 étant reliées ensemble par tout moyen approprié, telle qu'une vis 27. L'armature inférieure 28 est montée sur un support 29 constitué par exemple par un disque rendu solidaire d'une pièce de liaison 30, par des vis et écrous 31, ladite pièce de liaison 30 étant montée sur l'arbre 24 par l'intermédiaire de paliers 32. Sur l'arbre 24 est montée une poulie motrice 33 solidaire des paliers 32 et fixée sur la pièce de liaison 30 par des vis 34. Un compteur 35 de maillons de chaîne est associé à la poulie motrice 33 de manière à compter les maillons de la chaîne, non représentée, disposée sur ladite poulie motrice 33. De ce fait, le comptage des maillons de chaîne permet de mesurer la vitesse de la chaîne. L'ensemble de ces moyens de transmission directe est monté sur un plateau support 36 solidaire du plateau 7. Sur l'arbre intérieur de dévissage 16 est clavetée une poulie réceptrice 37 de rapport un demi.

Lors du dévissage d'un goujon, on commence par la transmission directe en excitant les armatures 23 et 28 et l'embrayage. Le couple de dévissage est transmis alors via les armatures 23 et 28, le disque support 29, la pièce de liaison 30, les poulies 33 et 37 jusqu'à l'arbre intérieur de dévissage 16. Il va de soi que la transmission directe a lieu alors que l'entraînement par roue libre ainsi qu'il va être décrit, est interrompu.

En effet, lorsque le couple à développer est trop important pour qu'il puisse être transmis par l'embrayage, on substitue à ce dernier l'entraînement par roue libre qui va développer un couple important prédéterminé pendant quelques secondes, par exemple 5 secondes. La friction de l'embrayage est détectée par le compteur de maillons 35 qui excite automatiquement l'électro-aimant 22, ce qui entraîne un déplacement du bras 21 du disque de commande 16 des ergots 19. En raison de la structure et du positionnement des galets 20, le déplacement du bras 21 provoque un arc-boutement des faces externes desdits galets 20 sur la couronne extérieure 15 et l'arbre intérieur de dévissage 16. Ceci est dû au fait que les faces externes des galets 20 sont des arcs de cercle dont les rayons de courbure sont tels qu'il y ait arc-boutement dans un sens de rotation de la couronne extérieure 15 et dégagement dans l'autre sens de rotation. Lorsque les galets 20 sont dégagés, c'est-à-dire qu'ils ne sont pas en contact avec la couronne extérieure 15 et l'arbre intérieur de dévissage, l'entraînement n'est plus assuré et il s'ensuit donc un débrayage, les galets occupant alors une position dite "en drapeau". Lorsque l'électro-aimant 22 n'est pas excité, les galets 20 occupent toujours la position en "drapeau" de façon à désolidariser la couronne extérieure 15 de l'arbre intérieur de dévissage 16 qui peut, dans ces conditions, être entraîné par la transmission directe de poulies et chaîne.

Grâce à la présente invention, on peut donc mettre en oeuvre deux moyens de dévissage en fonction du couple résistant produit par le goujon. Tant que le couple résistant reste inférieur à 30 mkg par exemple, la transmission directe par poulies et chaîne est suffisante pour dévisser le goujon. Pour des couples supérieurs à 30 mkg, c'est la transmission par roue libre et galets, qui est mise en oeuvre et permet, selon la valeur du rapport R/r, de multiplier le couple moteur par un coefficient multiplicateur. Pour une valeur de R/r égale à 10, on constate aisément qu'on peut atteindre un couple exceptionnel de $30 \times 10$ mkg.

Il est également à noter que le couple développé par la transmission à poulies et chaîne est limité par les seules résistances mécaniques des pièces utilisées et qu'il est impulsionnel ou transmis par saccades données par le mouvement alternatif de la bielle-manivelle 12. Ceci est particulièrement adapté au devissage.

Bien entendu, l'invention n'est nullement limitée au mode de réalisation décrit et représenté, elle est susceptible de nombreuses variantes accessibles à l'homme de l'art, suivant les applications envisagées.

C'est ainsi qu'en lieu et place de l'électro-aimant 20, on peut utiliser un vérin hydraulique, pneumatique ou hydropneumatique dont la commande sera assurée de façon à obtenir les mêmes fonctions que l'électro-aimant de commande 20.

**Revendications**

1. Dispositif rotatif de serrage-deserrage, notamment de goujonnage comprenant un arbre moteur (3), des premiers moyens de rotation (23 à 32, 37) de la tête de goujonnage (16) dans l'un ou l'autre sens de rotation et des seconds moyens indépendants (12 à 15) susceptibles d'être substitués auxdits premiers moyens lorsque l'effort de dévissage de ladite tête de goujonnage dépasse une valeur prédéterminée, constatée par un moyen de détection à friction d'embrayage (23, 28), dont les premiers moyens sont constitués par un embrayage dont une armature (23) est solidaire de l'arbre moteur (3), d'entraînement en rotation et dont l'autre armature (28) est reliée mécaniquement à l'arbre de goujonnage (16) et dont les seconds moyens sont constitués par un multiplicateur d'effort (12 à 15) relié mécaniquement à l'arbre de goujonnage, caractérisé en ce que le multiplicateur d'effort est constitué par une cinématique comprenant un excentrique (4) situé en aval de l'embrayage et calé sur l'arbre moteur et une bielle de liaison (12) reliant l'excentrique à une couronne extérieure (15) soumise ainsi à une rotation oscillatoire susceptible de transmettre au moyen d'une roue libre à galets (20) l'effort à fournir à l'arbre de dégoujonnage, lorsque le moyen de détection de la friction de l'embrayage (23, 28) constate la valeur prédéterminée de l'effort, le moyen de détection commandant alors le fonctionnement de la roue libre; la liaison entre l'armature (28) et l'arbre de goujonnage étant obtenue par une poulie motrice (33) qui est elle-même reliée mécaniquement par une chaîne à une poulie réceptrice (57) clavetée sur l'arbre de goujonnage.

2. Dispositif selon la revendication 1, caractérisé en ce que le moyen de détection de la valeur prédéterminée de l'effort de dévissage est constitué par un compteur de maillons (35) de la chaîne reliant les poulies (33) et (37).

3. Dispositif selon l'une quelconque des revendications 1 ou 2 caractérisé en ce que la couronne extérieure (15) coopère avec une série de galets (20) montés libres sur des ergots (19) solidaires d'un disque de commande (18) susceptible d'être déplacé angulairement par une commande extérieure (22) lorsque les premiers moyens sont débrayés.

4. Dispositif selon la revendication 3, caractérisé en ce que les moyens (22) d'entraînement en rotation du disque de commande (18) intermédiaire sont constitués par un électro-aimant.

5. Dispositif selon la revendication 4, caractérisé en ce que les galets (20) sont en appui sur la couronne extérieure (15) et l'arbre de dégoujonnage pour un sens de rotation de ladite couronne extérieure et libre de tout appui pour l'autre sens de rotation.

6. Dispositif selon la revendication 5, caractérisé en ce que les galets sont libres de tout appui lorsque le disque de commande (18) est dans sa position de repos.

7. Dispositif selon l'une quelconque des revendications 5 ou 6, caractérisé en ce que les moyens (22) d'entraînement en rotation du disque de commande sont constitués par un vérin hydraulique et/ou pneumatique.

**Patentansprüche**

1. Drehbare Festschraub- und Lösevorrichtung, insbesondere Anbolzvorrichtung mit einer Antriebswelle (3), ersten Drehantriebsmitteln (23—32, 37) des Anbolzkopfes (16) im einen oder andern Drehsinn und zweiten getrennten Mitteln (12—15), welche dann anstelle der ersten Mittel eingesetzt werden können, wenn der Losschraub-Kraftaufwand des genannten Anbolzkopfes einen vorbestimmten, durch ein Tastmittel der Kupplungsreibung (23, 28) ermittelten Wert überschreitet, wobei deren erste Mittel durch eine Kupplung gebildet werden, deren ein Beschlagteil (23) drehfest mit der Antriebswelle (3) und das andere Beschlagteil (28 formschlüssig mit der Anbolzwelle (16) verbunden sind, und deren zweite Mittel aus einer mechanisch mit der Anbolzwelle verbundenen Kraftübersetzungsvorrichtung (12—15) besteht, dadurch gekennzeichnet, dass die Kraftübersetzungsvorrichtung aus einer kinematischen, eine an die Kupplung nachgeschaltete und auf der Antriebswelle festverkeilte Exzenterscheibe und eine die Exzenterscheibe mit einem Aussenring (15) verbindende Koppelstange (12) umfassenden Vorrichtung derart besteht, dass der Aussenring somit einer oszillierenden Drehbewegung so unterworfen wird, dass durch diese mithilfe von einem Freilauf-Rollenrad (20) die der Bolzenlosschraubwelle zuzuführende Kraft dann übertragen werden kann, wenn das Tastmittel der Kupplungsreibung (23, 28) den vorbestimmten Kraftwert ermittelt, wobei sodann das Tastmittel die Funktion des Freilaufrades ansteuert, und wobei die Verbindung zwischen Beschlagteil (28) und Anbolzwelle über einer, ihrerseits mechanisch an einer auf der Anbolzwelle festverkeilten Abtreibscheibe (57) durch eine Kette verbundenen Antriebscheibe (33) erreicht wird.

2. Vorrichtung nach Anspruch 1, dadurch gekennzeichnet, dass das Tastmittel für den vorbestimmten Wert der Losschraubkraft aus einem Gleidzähler (35) der Kettenglieder der Scheibe (33) und (37) miteinander verbindenden Kette besteht.

3. Vorrichtung nach einem der Ansprüche 1 oder 2, dadurch gekennzeichnet, dass der Aussenring (15) zusammen mit einer Reihe von Rollen (20) mitwirkt, welche lose auf fest mit einer Steuerscheibe (18) verbundenen Stiftzapfen (19) gelagert sind, welche durch eine äussere Betätigungsvorrichtung (22) dann winkelmässig verstellt werden kann, wenn die ersten Mittel ausgerückt stehen.

4. Vorrichtung nach Anspruch 3, dadurch gekennziechnet, dass die Drehantriebsmittel (22) für die Drehbewegung der zwischengeschalteten Steuerscheibe (18) durch einen Elektromagnet gebildet sind.

5. Vorrichtung nach Anspruch 4, dadurch gekennzeichnet, dass die Rollen (20) sich auf dem Aussenring (15) und auf der Bolzenlosschraubwelle für den einen Drehsinn dieses Aussenringes abstützen und für den anderen Drehsinn abstützungsfrei bleiben.

6. Vorrichtung nach Anspruch 5, dadurch gekennzeichnet, dass in Ruhestellung der Steuerscheibe (18) die Rollen ohne jede Abstützung frei bleiben.

7. Vorrichtung nach Anspruch 5 oder 6, dadurch gekennzeichnet, dass die Drehantriebsmittel (22) für die Drehbewegung der Steuerscheibe aus einem Hydraulik- und/oder einem Druckluft-Zylinder bestehen.

## Claims

1. Tightening/loosening rotary device, namely for dowelling comprising a drive shaft (3), primary means (23 to 32, 37) for driving the dowelling head (16) in either direction and secondary independent means when the loosening force of said dowelling head exceeds a predetermined value, observed by a clutch friction detection means (23, 28), whose first means comprise a clutching device of which a frame (23) is integral with the drive shaft (3) and the other frame (28) is mechanically connected with the dowelling shaft (16) and whose secondary means comprise a force step-up mechanism (12 to 15) mechanically connected to the dowelling shaft, whereby the force step-up mechanism comprises a linkage including an excentric gear (4) located downstream of the clutching device set on the drive shaft and a connecting rod (12) connecting the excentric gear to an outer crown (15) subjected to oscillatory rotation capable of transmitting to the dowelling shaft the loosening force required by means of a roller-fitted free wheel (20), when the clutch friction detection means (23, 28) observes the predetermined force value, the detection means then controlling the free wheel operation; the connection between the frame (28) and the dowelling shaft being obtained by a drive pulley (33), itself mechanically connected by a chain to a driven pulley (57) keyed onto the dowelling shaft.

2. Device set forth in claim 1, wherein the detection means of the loosening force predetermined value comprises a link counter (35) for the chain connecting pulleys (33) and (37).

3. Device set forth in either of the claims 1 and 2, wherein the outer crown (15) operates together with a set of rollers (20), idle mounted on lugs (19) integral with a control disk (18) capable of angular displacement through an external control (22) when the primary means are disengaged.

4. Device set forth in claim 3, wherein the means (22) driving the intermediate control disk (18) include an electro-magnet.

5. Device set forth in claim 4, wherein the rollers (20) bear on the outer crown (15) and dowelling shaft for a given direction of rotation of said outer crown (loosening) and are free when driven in the opposite direction (tightening).

6. Device set forth in claim 5, wherein the rollers lie idle when the control disk (18) is in its rest position.

7. Device set forth in either of the claims 5 or 6, wherein the means (22) driving the control disk include a hydraulic and/or pneumatic jack.

FIG.1

0 052 687

FIG.2